Europäisches Patentamt

European Patent Office

Office européen des brevets

(11) Publication number: **0 511 591 A2**

# EUROPEAN PATENT APPLICATION

(21) Application number: **92106960.5**

(22) Date of filing: **23.04.92**

(51) Int. Cl.⁵: **H05B 37/02**

(30) Priority: **25.04.91 JP 95116/91**

(43) Date of publication of application:
**04.11.92 Bulletin  92/45**

(84) Designated Contracting States:
**DE GB**

(71) Applicant: **SEIKOSHA CO., LTD.**
**6-21, Kyobashi 2-chome**
**Chuo-ku, Tokyo(JP)**

(72) Inventor: **Seki, Yoichi Seikosha Co., Ltd.**
**Chiba Office**
**1-1 Taihei 4-chome Sumida-ku**
**Tokyo(JP)**
Inventor: **Endo, Shinichi Seikosha Co., Ltd.**
**Chiba Office**
**1-1 Taihei 4-chome Sumida-ku**
**Tokyo(JP)**
Inventor: **Saito, Hiroyuki Seikosha Co., Ltd.**
**Chiba Office**
**1-1 Taihei 4-chome Sumida-ku**
**Tokyo(JP)**
Inventor: **Ito, Akira Seikosha Co., Ltd. Chiba**
**Office**
**1-1 Taihei 4-chome Sumida-ku**
**Tokyo(JP)**
Inventor: **Kawai, Michio Seikosha Co., Ltd.**
**Chiba Office**
**1-1 Taihei 4-chome Sumida-ku**
**Tokyo(JP)**

(74) Representative: **Patentanwälte Grünecker,**
**Kinkeldey, Stockmair & Partner**
**Maximilianstrasse 58**
**W-8000 München 22(DE)**

(54) **Power supply circuit for driving a light emitting element.**

(57)

(Purpose)

Improved are design conditions for the parts relative to a step-up circuit for causing an emission of light of a distance measuring light emitting element.

(Construction)

Provided is a step-up circuit for outputting a step-up voltage from one terminal of a step-up capacitor. Provided also is a step-up voltage level changeover circuit for applying a higher step-up voltage higher than normal every time when the distance measuring light emitting element connected to the step-up capacitor emits the light than the step-up voltage in the normal state.

(Advantages)

The number of parts is reduced by eliminating the capcitor for the light emission; a space is reduced by using the capacitor having a small capacity; the soldering steps are automated; and the costs for assembly are ameliorated owing to the automation.

[FIG. 1]

step-up voltage level changeover circuit

AF light emitting diode

step-up circuit

2

(Detailed Description of the Invention)

(Field of the Invention)

A conventional power supply circuit for driving a light emitting element is, as illustrated in Fig. 4, composed of a step-up circuit 1, a step-up voltage control circuit 15, a voltage regulator 11, a CPU 13, an AF unit 12 and an AF light emitting diode 17 for emitting the light by an operation of a light emitting diode driving transistor 16.

The step-up circuit 1 consists of a coil 2, a rectifier diode 3, a switching transistor 4 and a step-up capacitor $C_1$. One end terminal of the coil 2 is connected to the ( + ) terminal of a battery VB having its (-) terminal connected to a ground point. While the other end of the other terminal thereof is connectd to a pin $P_1$ through an anode and a cathode of the rectifier diode 3, and is further connected to a collector of a switching transistor 4 having an emitter connected to the ground point. A base of the switching transistor 4 is connected to a pin $P_2$. One terminal of a step-up capacitor $C_1$ having the other terminal connected to the ground point is connected to the pin $P_1$ for outputting a step-up voltage.

Besides, an input side terminal of the voltage regulator circuit 11 is connected to the pin $P_1$, while the output side thereof is connected to one terminal of a capacitor $C_2$ which having the other terminal connected to the ground point, and which is supplied with a stabilizing power supply VDD. Further, one other terminal of a light emitting capacitor $C_3$ having the other terminal connected to the ground point is connected to a connecting point between resistors $R_4$ and $R_3$ having one terminal connected to the pin $P_1$ of the step-up circuit 1 and the other terminals connected in series to an anode of the AF light emitting diode 17. Note that a cathode of the AF light emitting diode 17 is connected to the ground point through a collector and an emitter of the light emitting diode driving transistor 16.

The step-up circuit 1 of the thus constructed conventional power supply circuit for driving the light emitting element has the known circuitry. A step-up capability of this circuit is determined by a loss of parts thereof and duties of step-up clocks applied to the switching transistor 4. The step-up voltage control circuit 15 composed of a comparator or the like performs a function to obtain a constant step-up voltage by stopping the step-up operation when the step-up voltage increases over a predetermined voltage and reducing the duty of the step-up clocks applied to a pin P6 from the CPU 13. Herein, the voltage which has been stepped up is applied to the input side of the voltage regulator 11. The regulated voltage VDD of approximately 5V is supplied from the output side to the CPU 13 and the AF unit 12. Further, the light emitting diode driving transistor 16 intended to drive the AF light emitting diode 17 is turned ON/OFF in response to signals outputted from a pin $P_5$ of the AF unit 12. The resistor $R_3$ and the light emitting capacitor C3 serve as a power supply for the AF light emitting diode 17. The AF light emitting diode 17 emits the lights with electric charges with which the light emitting capacitor $C_3$ is charged. The electric charges with which the light emitting capacitor $C_3$ is charged is supplied from the step-up capacitor $C_1$. If a large charge current flows in the light emitting capacitor $C_3$ at a charging cycle a predetermined voltage is not applied to the input side of the voltage regulator 11, with the result that the prescribed regulated voltage VDD can not be maintained. The resistor $R_4$ is provided for preventing this situation. A rush current flowing in the light emitting capacitor $C_3$ is restrained by this resistor $R_4$.

As described above, the conventional power supply circuit for driving the light emitting element requires the capacitor having a large capacity. The capacitor with the large capacity typically involves the use of an aluminium electrolyic capacitor. Therefore, if packaged into a small-sized camera, there arise such drawbacks that the space is not enough and costs for parts are disadvantageous.

Besides, middle and large-sized capacitors such as an aluminium electrolyic capacitor, etc. are assembled manually, resulting in such a drawback that the costs for assembly increase.

(Object of the Invention)

It is an object of the present invention, which has been devised in the light of the above-mentioned drawbacks, to provide a power supply circuit for driving a light emitting element which is capable of reducing the number of parts by eliminating a light emitting capacitor, reducing the space factor by using a capacitor having a small capacity, automating the soldering steps and ameliorating the costs for assembly owing to the automation by providing a step-up voltage level changeover circuit for applying a higher step-up voltage every time when a distance measuring light emitting element connected to a step-up capacitor emits the light than the step-up voltage in the normal state.

(Means for Solving the Problems)

A power supply circuit for driving a light emitting element according to the present invention comprises; a step-up circuit for outputting a step-up voltage from one terminal of a step-up capacitor; a step-up voltage level changeover means for changing over a step-up voltage level of the step-up capacitor to a second step-up voltage level higher than the first step-up voltage level; and a distance measuring light emitting element connected to the second step-up voltage terminal connected to one terminal of the step-up capacitor and changed over by the step-up voltage level changeover means.

(Operation)

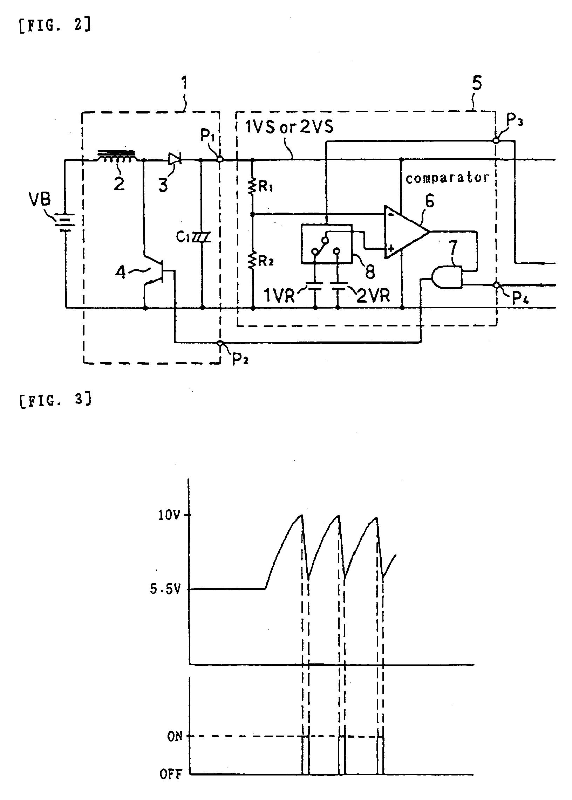

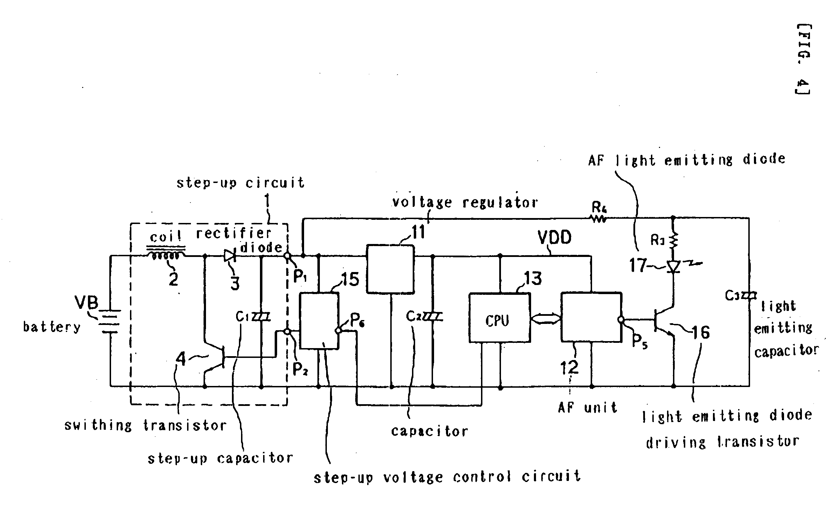

When no step-up voltage changeover signal is applied to a pin $P_3$ of a step-up voltage level changeover circuit 5 illustrated in Fig. 2, a reference voltage for determining the step-up level is changed over to the first reference voltage 1VR and first step-up level 1VS is selected. If the regulated voltage VDD is 5V, for instance, the first step-up level 1VS reaches approximately 5.5V. When the step-up voltage changeover signal is applied to the pin $P_3$, the reference voltage for determining the step-up level is changed over to second reference voltage 2VR, whereby second step-up level 2VS becomes approximately 10V. In this state, when an AF light emitting diode 17 emits the light, as illustrated in Fig. 3, the step-up voltage of the step-up capacitor $C_1$ abruptly drops down in accordance with a light emitting signal from a point of time when the step-up capacitor $C_1$ has increased up to approximately 10V of the second step-up level 2VS. After stopping the emission of light, the step-up capacitor $C_1$ is quickly recharged. The charge and discharge are repeated every time the AF light emitting diode 17 emits the light.

(Embodiment)

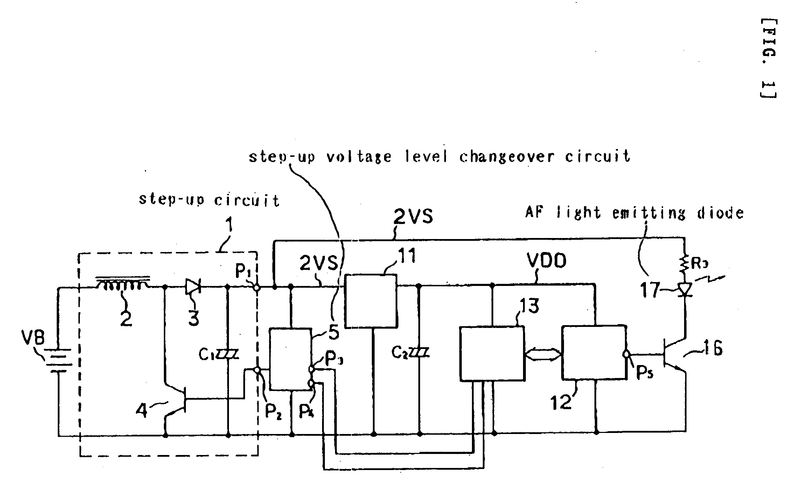

One embodiment of a power supply circuit for driving a light emitting element according to the present invention is described in detail with reference to Figs. 1-3.

The same components of Fig. 1 as those of Fig. 4 are marked with the like symbols, and hence the description thereof will be omitted.

The power supply circuit for driving the light emitting element is, as illustrated in Fig. 1, composed of a step-up circuit 1, a step-up voltage control circuit 5, a voltage regulator 11, a CPU 13, an AF unit 12 and an AF light emitting diode 17 for emitting the light by an operation of a light emitting diode driving transistor 16.

The step-up circuit 1 consists of a coil 2, a rectifier diode 3, a switching transistor 4 and a step-up capacitor $C_1$. One end of the coil 2 is connected to the (+) terminal of a battery VB having its (-) terminal connected to a ground point, while the other end thereof is connected to a pin $P_1$ through an anode and a cathode of the rectifier diode 3, and is further connected to a collector of a switching transistor 4 having an emitter connected to the ground point. A base of the switching transistor 4 is connected to a pin $P_2$. One terminal of a step-up capacitor $C_1$ having the other terminal connected to the ground point is connected to the pin $P_1$ for outputting a step-up voltage.

Besides an input side of the voltage regulator 11 is connected to the pin $P_1$ to which the step-up voltage is inputted, while an output side thereof is connected to an AF unit 12 and a CPU 13 is supplied with a regulated voltage VDD. The output side thereof is also connected to one terminal of a capacitor $C_2$ having the other terminal connected to the ground point.

Further, an anode of the AF light emitting diode 17 is connected via a resistor $R_3$ to the pin $P_1$ of the step-up circuit 1, and a cathode thereof is connected to the ground point through a collector and an emitter of the light emitting diode driving transistor 16.

The step-up voltage changeover circuit 5 is, as shown in Fig. 2, composed of a comparator 6, an AND circuit 7 and a reference voltage changeover element 8 consisting of a changeover contact. The (-) input terminal of the comparator 6 is connected to a connecting point between the resistors $R_1$ and $R_2$ connected in series between the pin $P_1$ and the ground point, while the (+) input terminal thereof is connected to the changeover contact of the reference voltage changeover element 8.

Further, the steady-closed and steady-opened sides of the changeover contact of the reference voltage changeover element 8 are connected respectively to the (+) sides of first and second reference voltages 1VR, 2VR whose (-) sides are connected to the ground point.

Additionally, the output side of the comparator 6 is connected to an input side of the AND circuit 7 the other input side of which is connected to a pin $P_4$; and the output side of the AND circuit 7 is connected to the pin $P_2$ of the step-up circuit 1. The pins $P_3$, $P_4$ are also connected to the CPU 13. Inputted to the pin $P_3$ is a step-up voltage changeover signal for operating the reference voltage changeover element 8. Step-up clocks are applied to the pin $P_4$.

In the thus constructed power supply circuit for driving the light emitting element, when no step-up voltage changeover signal is applied to the pin $P_3$ of the step-up voltage level changeover circuit 5 illustrated in Fig. 2, the reference voltage for determining the step-up level is set to the first reference voltage 1VR and a first step-up level 1VS is selected. For instance if the regulated voltage VDD is 5V, this first step-up level 1VS reaches approximately 5.5V. When the step-up voltage changeover signal is applied to the pin $P_3$, the reference volt-

age for determining the step-up level is changed over to the second reference voltage 2VR, whereby the second step-up level 2VS becomes approximately 10V. In this state, when the AF light emitting diode 17 emits the light, as illustrated in Fig. 3, the step-up voltage of the step-up capacitor $C_1$ abruptly drops down in accordance with a light emitting signal from a point of time when the step-up voltage of the step-up capacitor $C_1$ has increased up to approximately 10V. After stopping the emission of light, that is quickly recharged with the electricity. The charge and discharge are repeated every time the AF light emitting diode 17 emits the light. Herein, during the light emission of the AF light emitting diode 17, the regulated voltage VDD supplied to the CPU 13 and the AF unit 12 from the voltage regulator 11 is kept at 5V, because the regulated voltage VDD does not decrease under 5.5V of the first step-up level 1VS. Note that the first step-up level 1VS is determined by the regulated voltage VDD as the power supply voltage and, with respect to the second step-up level 2VS, if the current flowing to the AF light emitting diode 17 and the time are set to 1A and 100 - 150 $\mu$S respectively, it is sufficient that the capacity of the step-up capacitor C1 has 47 - 68 $\mu$F or thereabouts.

The reference voltage changeover circuit of the step-up voltage level changeover circuit in the embodiment discussed above may involve the use of a semiconductor element. Further, the switching transistor 4 and the light emitting diode driving transistor 16 may be constructed of integrated MOS-FETs or the like in combination with other circuits.

(Advantages of the Invention)

The power supply circuit for driving the light emitting element according to the present invention comprises; the step-up circuit for outputting the step-up voltage from one terminal of the step-up capacitor; the step-up voltage level changeover means for changing over the step-up voltage level of the step-up capacitor to the second step-up voltage level higher than the first step-up voltage level; and the distance measuring light emitting element connected to the second step-up voltage terminal connected to one terminal of the step-up capacitor and changed over by the step-up voltage level changeover means. Exhibited therefore, are advantages of reducing the number of parts by eliminating the light emitting capacitor, reducing the space by using the cpacitor having a small capacity, automating the soldering steps and ameliorating the costs for assembly owing to the automation.

(Brief Description of the Drawings)

(Fig. 1)

Fig. 1 is a block diagram showing one embodiment of a power supply circuit for driving a light emitting element according to the present invention.

(Fig 2)

Fig. 2 is a block diagram illustrating a step-up voltage level changeover circuit used for a power supply circuit for driving a light emitting element according to the present invention.

(Fig. 3)

Fig. 3 is a diagram illustrating a power supply circuit for driving a light emitting element according to the present invention.

(Fig. 4)

Fig. 4 is a block diagram illustrating a conventional power supply circuit for driving a light emitting element.

(Reference Numerals)

1 - - - step-up circuit 5 - - - step-up voltage level changeover circuit (step-up voltage level changeover means) 17 - - - AF light emitting diode (distance measuring light emitting element) $C_1$ - - - step-up capacitor

**Claims**

1. A power supply circuit for driving a light emitting element comprising;

   a step-up circuit for outputting a step-up voltage from one terminal of a step-up capacitor; a step-up voltage level changeover means for changing over a step-up voltage level of said step-up capacitor to a second step-up voltage level higher than the first step-up voltage level; and

   a distance measuring light emitting element connected to the second step-up voltage terminal connected to one terminal of said step-up capacitor and changed over by said step-up voltage level changeover means.

[FIG. 1]

[FIG. 2]

[FIG. 3]

[FIG. 4]

EP 0 511 591 A2

8